# EUROPEAN PATENT SPECIFICATION

(11) **EP 1 984 241 B1**
(45) Date of publication and mention of the grant of the patent: **26.05.2010**
(21) Application number: 07726400.0
(22) Date of filing: 16.02.2007
(51) Int. Cl.: B64C 1/12, B64C 3/26, B29C 70/44, B29C 70/54

(54) **METHOD FOR AUTOCLAVE-FREE ADHESIVE BONDING OF COMPONENTS FOR AIRCRAFT**
VERFAHREN ZUR AUTOKLAVEN-FREIEN VERKLEBUNG VON FLUGZEUGKOMPONENTEN
PROCÉDÉ DE FIXATION PAR COLLAGE SANS AUTOCLAVE D'ÉLÉMENTS POUR AÉRONEF

(30) Priority: 17.02.2006 DE 102006007429
(43) Date of publication of application: 29.10.2008
(73) Proprietor: Airbus Deutschland GmbH, 21129 Hamburg (DE)
(72) Inventor: NOBIS, Heiner, 27239 Twistringen (DE); ROEGLIN, Wilfried, 26954 Nordenham (DE); BISCHOFF, Olaf, 26969 Butjadingen (DE); SCHROEDER, Andreas, 27753 Delmenhorst (DE)
(74) Representative: Peckmann, Ralf
(86) International application number: PCT/EP2007/051511
(87) International publication number: WO 2007/093636

(56) References cited:
- WO-A-01/96094
- US-A- 5 242 523

## Description

The invention relates to a method for autoclave-free adhesive bonding of a plurality of components in order to form, in particular, large-sized structural components for aircraft.

Large-sized structural components are nowadays often manufactured in the aircraft industry by adhesively bonding together metallic components so that at least the number of necessary riveted connections can be reduced. For example, nowadays entire fuselage shells are manufactured by adhesively bonding stringers and/or window cut-out reinforcements (doublers) to aluminium alloy plates. Large-sized wing shells can be manufactured economically in terms of time and cost in this way by adhesively bonding stringers and/or cross ribs. Not only monolithic structures but also sandwich constructions of sheet metal - honeycomb - sheet metal can be manufactured in this way.

In order to adhesively bond the individual components, adhesive films with a backing material (mat or fabric) which are impregnated with a plastic material based on an epoxy resin or the like are used.

In order to form the large-sized structural component, the components are firstly positioned and aligned with respect to one another on a suitable supporting structure, in accordance with the previously known methods. The adhesive films are applied in advance between the components which are to be adhesively bonded to one another.

In the previously known adhesive bonding methods it is necessary to protect, in particular, sharp-edged regions or sections of the entire arrangement with suitable covering means, for example with adhesive tapes or the like, before the entire arrangement is covered with a vacuum film and placed in an autoclave in order to cure the adhesive films. This prevents the vacuum film being punctured when pressure is applied to the entire structural component for ultimate curing in an autoclave. Furthermore, in the known adhesive bonding methods, silicone pressure elements have to be used in certain cases in order to increase the local surface pressing. In order to avoid adversely affecting the strength of the adhesively bonded connections through silicone impurities, it is necessary when using silicone pressure elements to cover these elements themselves particularly carefully with a suitable release film. Any fixing pins which may be necessary and which serve to initially secure the components to one another must likewise be laboriously covered with suitable means in order to avoid the film being punctured. Only a structure which is prepared in such a way can be covered with the film and subsequently ultimately cured in the autoclave in order to form the finished structural component. The curing in the autoclave is necessary due to the high contact pressure between the components which is necessary to form adhesively bonded connections which can be loaded mechanically to a sufficient degree.

According to the known fabrication methods, the preparation of the components which are positioned and aligned with respect to one another for the subsequent curing of the entire structure in an autoclave is extremely time-consuming and therefore costly. Furthermore, placing the structure in an autoclave for the purpose of curing requires solid and therefore heavy supporting structures which have to be fabricated, for example, from steel owing to the forces occurring in the autoclave.

WO 01/96094 A2 discloses a method and apparatus for the manufacture of fiber reinforced structures. The apparatus comprises a conformable locating aperture system used for the formation of composite structures.

US 5,242,523 discloses a method for forming and curing an intricate structure of criss-crossing composite stringers and frames that are bonded to a skin panel.

The object of the invention is therefore to provide a simplified method for manufacturing adhesively bonded connections on a large-sized structural component.

This object is achieved by a method as specified in the claims.

Since the curing in accordance with the inventive method takes place only within a vacuum bag which is formed by the vacuum film, and not at an excess pressure of up to 1000 KPa in an autoclave, sharp-edged regions no longer have to be provided with separate, suitable covering means, for example adhesive tapes or the like, before the vacuum film is applied, in order to avoid damage to the vacuum film and resulting leakages. Delimitation of the covering means results in a considerable saving in terms of time and cost.

Furthermore, the curing in the vacuum bag permits more lightweight supporting structures to be used, and the said structures can be formed, for example, completely from aluminium materials.
The otherwise necessary masking of adhesive pins which are usually provided to secure the components in space can also be eliminated without replacement.
In addition, the masking of large-area doubler structures can also be dispensed with.
Owing to the pressure effect which is low when curing in a vacuum bag, the tendency of the components to become displaced with respect to one another is reduced. In addition, settling movements occur only to a relatively small degree. Under certain circumstances it is therefore possible to reduce the number of adhesive pins necessary to secure the components with otherwise unchanged fabrication tolerances.

Furthermore, it is no longer necessary to arrange silicone pressure elements in the region of stringer feet in order to locally increase the contact pressure, said arrangement requiring the pressure elements themselves to be provided with a release film in order to avoid contamination of adhesive bonding surfaces by silicone deposits.
Ventilation fabrics (referred to as "Airweave" etc.) made of nylon or polyester which have previously been placed on the components, at least in certain areas, are likewise no longer necessary, or necessary only to a considerably smaller degree, for improving the adhesive bonding result.
Accordingly, after the conclusion of the adhesive bonding process, the removal of the abovementioned, required covering means and resources is also dispensed with.
The lower pressures which occur during the curing in a vacuum bag at the same time reduce the emergence of adhesive into undesired zones, such as for example in fold regions of the vacuum film, as a result of which in turn the post-processing work in the form of cleaning operations or the like is reduced. The reduced post-processing work also results in less cleaning media such as, for example, chemical solvents, aggressive cold cleaners or the like, having to be used, which is significant in particular in terms of environmental protection.
Curing in a vacuum bag in a curing oven is, compared to curing in an autoclave, also less energy-intensive, as a result of which it is possible to take environmental protection measures and minimize the energy costs.
Furthermore, the inventive method can also be used for complete repairs to damage while the aircraft is operating. In this context, curing in a vacuum bag permits, for example, mobile supporting structures, and under certain circumstances even supporting structures which can be used in the open air (referred to as "field process") to be made available. In this case, the necessary curing temperature in the supporting structure can be generated, for example, by a transportable hot air blower.
The modified curing parameters which are used in the application of the inventive method also permit the method to be applied in a continuous operation principle so that large-sized structural components can be fabricated continuously (oven line).
Finally, the method permits fabrication tolerances to be reduced since when curing is performed in a vacuum bag contact pressures occur which are lower by a factor of up to 10 compared to curing in an autoclave so that undesired displacement of the components to be adhesively bonded to one another is largely avoided.
The inventive method is not to be considered here as being restricted to the adhesive bonding of components made of aluminium alloys in order to form large-sized structural components in the aircraft industry. Instead, the inventive method can also be used to adhesively bond any desired composite materials to aluminium components.

One advantageous refinement of the method provides for the at least one adhesive film to be cured at a partial vacuum between 70 kPa and 100 kPa and at a temperature between 115°C and 125°C.
Since the adhesive bonding of the components by means of the adhesive films occurs at a relatively low partial vacuum and at only moderate temperatures, a considerably simplified method sequence is obtained. The partial vacuum between 70 kPa and 100 kPa ensures sufficient contact pressure of the components to be adhesively bonded even if the curing only occurs in a vacuum bag and not in an autoclave at an excess pressure of up to 1000 kPa.

According to a further advantageous refinement, the components are positioned and aligned with respect to one another on the supporting structure, the surface geometry of said structure corresponding essentially to a surface geometry of the structural component which is to be adhesively bonded together and which is composed of the components.
Using a substructure to position, align and subsequently adhesively bond the components to one another permits compliance with tight fabrication tolerances.
According to a further advantageous refinement of the method there is provision for the vacuum film to be positioned directly on the components which are to be adhesively bonded together.
As a result, the previously time-consuming and costly structure with covering strips, release films, pressure elements and pressure strips for increasing the contact pressure in order to bring about the integrity of the vacuum film which is finally applied to the components to be adhesively bonded, in order to form the vacuum bag, is dispensed with.

According to the present invention, the components are formed with an aluminium alloy and/or with a composite material.

As a result, the method can also be applied in large-sized structural components which are partially formed with composite materials.

A further refinement provides for the at least one adhesive film to be formed with a backing fabric which is impregnated with epoxy resin.
This refinement ensures a high degree of dimensional accuracy of the adhesively bonded connections to be produced between the components. Furthermore, the adhesive films are easy to use, that is to say to apply, in the region of the connecting points.

In the drawing:
- Figure 1: is a schematic cross-sectional illustration through a large-sized structural component,
- Figure 2: is an illustration of the complex structure which was previously necessary according to the prior art, using the example of adhesive bonding of a stringer to a skin panel in an autoclave, and
- Figure 3: shows a cross-sectional illustration through a simplified structure for providing the same adhesive bonding according to the inventive method.

Identical structural elements have in each case the same reference numerals in the drawing.

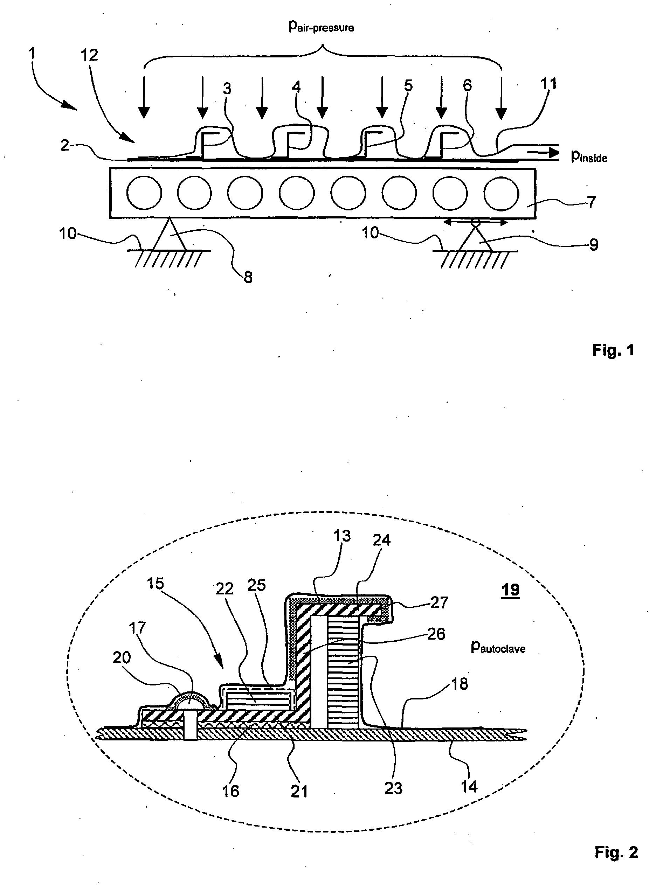

Figure 1 shows a cross-sectional illustration through a structure having a plurality of components which are to be adhesively bonded to one another in accordance with the inventive method in order to manufacture a large-sized structural component 1.

The large-sized structural component 1 can be, for example, a landing flap, a cover skin for an airfoil, a rudder unit, an elevator unit, a segment for a fuselage shell, having for example a plurality of window cutouts, or the like. The sequence of the inventive method will now be illustrated in more detail with reference to the illustration in Figure 1.

In order to carry out the method, the components 2, 3, 4, 5 and 6 are placed, positioned and aligned with respect to one another on a supporting structure 7. The component 2 in the embodiment shown in Figure 1 is a skin panel composed of an aluminium alloy which is to be adhesively bonded to the positioned components 3 to 6 in order to reinforce them. The components 3 to 6 are also referred to as stringers or reinforcing profiles with an essentially Z-shaped cross-sectional geometry, said stringers serving, inter alia, to improve the mechanical properties of the skin panel. In a manner corresponding to the material used for the skin panel, the stringers are also formed with an aluminium alloy. In contrast to the aluminium alloy material used, the components 2 to 6 can also be formed with composite materials, for example with carbon-fibre-reinforced plastics or the like. The components 2 to 6 can alternatively also be formed with a coated metal-plastic composite material such as, for example, "Glare" .

Before the actual adhesive bonding process, the necessary adhesive films for manufacturing the actual connection are applied to the necessary connecting points between the components 2 to 6.

The adhesive films which are present in roll form are formed with a backing material, for example in the form of a nylon fabric, which is pre-impregnated with a curable plastic material. In order to pre-impregnate the backing material, it is possible, for example, to use pre-cured epoxy resins as curable plastic material, which are stored at low temperatures in order to avoid premature curing. The following adhesive films, for example, can be used to carry out the inventive method: the adhesive film EA9696.03NW from Henkel, Bay Point, USA and the adhesive film FM94M.03 from Cytec Engineered Materials, Wrexham, UK. For the sake of better clarity of the drawing, the adhesive films between the components 2 to 6 are not illustrated in the illustration in Figure 1.

Before the adhesive bonding locations are applied, the connecting points between the components 2 to 6 are subjected if appropriate to suitable pretreatment, for example by chemical cleaning, alkali and acid etching, an anodizing method and the painting on of primers or the like, in order to increase the adhesive effect and thus the mechanical load bearing capacity which is achievable for the adhesively bonded connection.

The supporting structure 7 is held on the two supports 8, 9, and it is possible to connect the supports 8, 9 fixedly or displaceably to the supporting structure 7. In the exemplary embodiment shown in Figure 1, the horizontal displaceability of the support 9 permits, inter alia, compensation of mechanical stresses which can occur when there are temperature fluctuations between the components 2 to 6 or the supporting structure 7. The supports 8, 9 are in turn permanently connected to the underlying surface 10. The surface geometry of the supporting structure 7 is preferably matched as precisely as possible to the surface geometry of the structural component 1 in order to ensure a high degree of dimensional accuracy of the large-sized structural component 1 to be manufactured.

Since the curing of the adhesive films used to connect the components 2 to 6 in the course of the inventive method takes place at low temperatures between 115°C and 125°C and at a curing pressure between 70 kPa and 100 kPa, the entire structure can, in contrast to the procedure in the previously known adhesive bonding methods which operate with considerably higher pressures and/or curing temperatures in the autoclave, be covered with a continuous vacuum film 11 without a covering means (adhesive strips, Airweave, etc.) as well as means for increasing the local contact pressure (silicone strips or silicone blocks etc.) in the region of the components 2 to 6 to be adhesively bonded. The low curing parameters permit the structure which is formed from the components 2 to 6 to be cured without covering means and without contact pressure means in a vacuum bag, resulting in a considerably simpler fabrication sequence.

The vacuum film 11 forms, together with an upper side of the substructure 7, a gas-tight vacuum bag 12 which, after a corresponding partial vacuum P_{inside} has been provided by the ambient air pressure Pₐᵢᵣ₋ₚᵣₑₛₛᵤᵣₑ for a sufficient contact pressure between the components 2 to 6 to be adhesively bonded, serves to manufacture an adhesively bonded connection which can be subjected to high mechanical loading. After the vacuum film 11 has been applied, the vacuum bag 12 which is formed in this way is partially evacuated, that is to say is placed at an internal pressure p_{inside} between 70 kPa and 100 kPa so that the external air pressure pₐᵢᵣ₋ₚᵣₑₛₛᵤᵣₑ generates the contact pressure which is necessary to achieve an optimum adhesively bonded connection between the components 2 to 6.
The entire process for curing the adhesive film 16 which forms the adhesively bonded connection extends here over a time period between 60 minutes and 90 minutes, a temperature between 115°C and 125°C- being maintained.
The use of an adhesive film 16 which has lower curing parameters permits here the described curing of the structure or of the entire arrangement in a vacuum bag 12 at relatively low pressures between 70 and 100 kPa in the described temperature interval.

The curing of the components 2 to 6 can also be carried out in an autoclave in the course of the inventive method. For this purpose, the entire structure which is formed from the components 2 to 6, the vacuum film 11 and the supporting structure 7 and the entire arrangement for completely curing the adhesive films are placed in the autoclave, the autoclave serving only to provide the temperatures between 115°C and 125°C which are necessary for a satisfactory sequence of the curing process, and the autoclave no longer being subjected to an energy-intensive excess pressure of up to 1000 KPa. Instead, the autoclave for carrying out the inventive method is unpressurized, that is to say is operated at the level of the ambient air pressure. In this way, any autoclaves which are still present can also continue to be used for carrying out the inventive autoclave-free curing process.

However, according to the inventive method the curing process will particularly advantageously take place in a continuously operating flow-through furnace, as a result of which continuous and therefore more cost-effective fabrication of the large-sized structural components for aircraft is made possible without relatively large breaks in production.

After the conclusion of the curing process, the vacuum film 11 which cannot be used again can be lifted off from the now adhesively bonded components 2 to 6, and the large-sized structural component 1 can be subjected to further post-processing steps. The post-processing expenditure on the structural component 1 is, however, considerably reduced owing to the application of the autoclave-free inventive method since, as has already been stated above, there is essentially no longer any need for additional covering means such as, for example, masking strips or the like, in particular on sharp-edged regions and adhesive pins, or for means for increasing the local contact pressure, and consequently they also no longer need to be removed.

The post-cleaning work on the adhesively bonded components 2 to 6 is also reduced significantly when the inventive method is applied since, owing to the vacuum curing between the components 2 to 6 to be adhesively bonded, there is now only a reduced contact pressure, which largely rules out an undefined emergence of adhesive (referred to as spinning) between the components 2 to 6 to be adhesively bonded. The work-intensive post-processing of the components 2 to 6 which was previously generally necessary after the curing of the adhesive film 16, for example by cleaning operations with aggressive cold cleaners, chemical roughening means, grinding agents and/or polishing agents, etc., can also essentially be eliminated without replacement.

Since the components 2 to 6 which are to be adhesively bonded are cured without an autoclave, that is to say essentially only in a vacuum bag 12 with relatively low contact pressures, the supporting structure 7 can more easily be embodied in a static fashion. It is no longer necessary to use a supporting structure 7, for example made of steel, which is relatively solid, costly and complicated to fabricate.

Figure 2 shows an exemplary illustration of the previously necessary, complex structure which has been used to adhesively bond a stringer 13 to a skin panel 14 in an autoclave.

An adhesive film 16 which forms the actual mechanical connection between the skin panel 14 and the stringer 13 is arranged between the skin panel 14 and the stringer 13 in the region of a connecting point 15. An adhesive pin 17 is used for the initial fixing of the position of the stringer 13 in relation to the skin panel 14 up to the conclusion of the curing process. After the conclusion of the curing process, the adhesive pin 17 can be removed. In order to avoid the vacuum film 18 being punctured owing to the high excess pressures acting on the workpiece in an autoclave 19, the adhesive pin 17 is covered with an adhesive tape 20. A first silicone block 22 is arranged as a pressure element in the region of a lower limb 21 of the stringer 13 in order to increase the local contact pressure in this region. A second silicone block 23 is positioned as a pressure element between an upper limb 24 of the stringer 13 and the skin panel 14 in order to protect against tilting of the stringer 13 when pressure is applied. In order to avoid contamination of the connecting point 15 on the skin panel 14 by silicone deposits from the silicone blocks 22, 23, the first silicone block 22 is surrounded by a release film 25. Correspondingly, the second silicone block 23 must also, if appropriate, be wrapped with such a release film. The upper limb 24 of the stringer 13 and a centre web 26 of the stringer 13 are covered with an adhesive strip 27 in order to fabricate the structure or the entire arrangement which is to be placed in an autoclave. The covering of the sharp-edged regions of the stringer 13 and of the adhesive pin 17 with the adhesive tapes 20, 27 prevents damage to the vacuum film 18 by puncturing or penetration owing to the high excess pressure of up to 1000 KPa prevailing in the autoclave 19. The entire structure or the entire arrangement is then placed in the autoclave 19 and the adhesive film 16 is cured at temperatures of 125°C - 130°C and at a pressure of up to 1000 KPa over a time period of several hours in order to finally connect the stringer 13 to the skin panel 14.

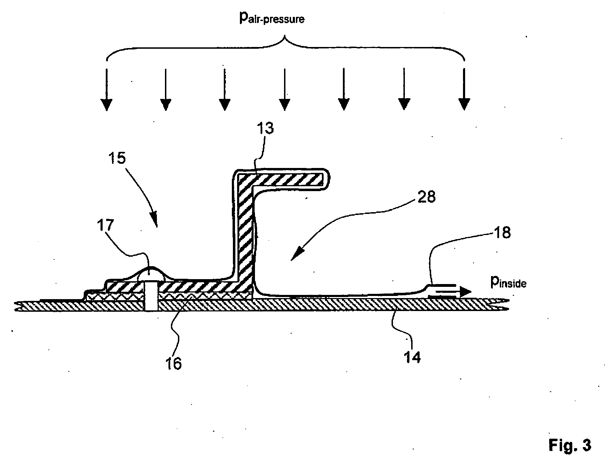

Figure 3 shows the simplified structure which is all that is now necessary to carry out the inventive method.

The stringer 13 is arranged on the skin panel 14 in accordance with the illustration in Figure 2. The adhesive film 16 is arranged between the stringer 13 and the skin panel 14 in the region of the connecting point 15. The adhesive pin 17 for initially fixing the position of the stringer 13 on the skin panel 14 no longer has to be covered with the previously necessary adhesive tape 20. The same applies to the first and second silicone blocks 22, 23 including the covers for the silicone blocks 22, 23 with the release film 25. Furthermore, the adhesive strip 27 for covering the upper, sharp-edged regions of the stringer 13 is eliminated.

According to the inventive method, all that is now necessary is to provide the skin panel 14 and the stringer 13 in the region of the connecting point 15 with the vacuum film 18 so that the expenditure incurred for the method for manufacturing or retrofitting the structure, composed of the stringer 13, the skin panel 14, the adhesive film 16 and the vacuum film 18, is considerably reduced.

According to the described fabrication of the structure according to Figure 3, a vacuum bag 28 which is formed by means of the vacuum film 18 is partially evacuated to such an extent that an internal pressure P_{inside} between approximately 70 kPa and 100 kPa is established in the vacuum bag 28 in order to generate the necessary mechanical contact pressure between the stringer 13 and the skin panel 14 as a result of the ambient air pressure Pₐᵢᵣ₋ₚᵣₑₛₛᵤᵣₑ.

The structure which is formed in this way is subsequently placed in an autoclave for final curing in order to ensure the necessary curing temperature of 115°C to 125°C at a pressure between 70 kPa and 100 kPa during the curing period of 60 to 90 minutes. The autoclave serves here only to maintain the necessary curing temperature in a range between 115°C and 125°C and according to the invention it is no longer required to generate an excess pressure of up to 1000 KPa.

In contrast to this, the illustrated structure can be cured if the inventive method is particularly advantageously applied in a nonpressurized flow-through oven in order to provide a continuous, and thus more cost-effective, fabrication process.

### List of reference numbers

- 1: Structural component
- 2: Component (skin shell)
- 3: Component (stringer)
- 4: Component (stringer)
- 5: Component (stringer)
- 6: Component (stringer)
- 7: Supporting structure
- 8: Support
- 9: Support
- 10: Underlying surface
- 11: Vacuum film
- 12: Vacuum bag
- 13: Stringer
- 14: Skin panel
- 15: Connecting points
- 16: Adhesive film
- 17: Fixing pin
- 18: Vacuum film
- 19: Autoclave
- 20: Adhesive tape
- 21: Lower limb (stringer)
- 22: First silicone block
- 23: Second silicone block
- 24: Upper limb (stringer)
- 25: Release film
- 26: Centre web
- 27: Adhesive tape
- 28: Vacuum bag

## Claims

1. Method for autoclave-free adhesive bonding of aluminium alloy or composite material stringers (13) to an aluminium alloy skin panel (14) in order to form large-sized structural components (1) for aircraft having the following steps:
- at least one adhesive film (16) is applied in the region of connecting points (15) of the stringers (13) and of the skin panel (14), the adhesive film (16) being embodied as a backing fabric which is impregnated with an epoxy resin;
- the stringers (13) and the skin panel (14) are positioned and aligned with respect to one another on a supporting structure (7);
- the aligned stringers (13) and the aligned skin panel (14) are covered with a vacuum film (11, 18) in order to form a vacuum bag (12, 28), the vacuum film (11, 18) being applied directly to the stringers (13) and the skin panel (14) which are to be adhesively bonded together;
- a partial vacuum p_{inside} is applied to the vacuum bag (12, 28) in order to apply a sufficient contact pressure to the stringers (13) and the skin panel (14) by means of the ambient air pressure p_{air pressure}; and
- the at least one adhesive film (16) is cured in order to finally adhesively bond the stringers (13) and the skin panel (14) to one another, the curing of the at least one adhesive film (16) taking place at a temperature which is above room temperature.

2. Method according to Claim 1, **characterized in that** the at least one adhesive film (16) is cured at a partial vacuum between 70 kPa and 100 kPa and at a temperature between 115°C and 125°C.

3. Method according to Claim 1 or 2, **characterized in that** the surface geometry of the supporting struture (7) corresponds essentially to a surface geometry of the structural component (1) which is to be adhesively bonded together and is composed of the stringers (13) and the skin panel (14).

4. Method according to one of Claims 1 to 3, **characterized in that** the stringers (13) and the skin panel (14) are embodied with an aluminium alloy and/or a composite material.

## Patentansprüche

1. Verfahren zur autoklaven-freien Verklebung von Stringern (13) aus einer Aluminiumlegierung oder einem Verbundwerkstoff mit einem Hautfeld (14) aus einer Aluminiumlegierung zur Bildung von großformatigen Strukturbauteilen (1) für Luftfahrzeuge mit den folgenden Schritten:
- Aufbringen mindestens eines Klebefilms (16) im Bereich von Verbindungsstellen (15) der Stringer (13) und des Hautfeldes (14), wobei der Klebefilm (16) als ein mit einem Epoxidharz imprägniertes Trägergewebe ausgebildet wird;
- Positionieren und Ausrichten der Stringer (13) und des Hautfeldes (14) zueinander auf einer Unterstützungskonstruktion (7);
- Abdecken der ausgerichteten Stringer (13) und des ausgerichteten Hautfeldes (14) mit einer Vakuumfolie (11, 18) zur Bildung eines Vakuumsacks (12, 28), wobei die Vakuumfolie (11, 18) direkt auf die zusammen zu verklebenden Stringer (13) und das Hautfeld (14) aufgebracht wird;
- Anlegen eines Unterdrucks Pᵢₙₙₑₙ an den Vakuumsack (12, 28), um durch den Umgebungsluftdruck P_{Luftdruck} einen ausreichenden Anpressdruck auf die Stringer (13) und das Hautfeld (14) auszuüben; und
- Aushärten des mindestens einen Klebefilms (16) zum endgültigen Verkleben der Stringer (13) und des Hautfeldes (14) miteinander, wobei das Aushärten des mindestens einen Klebefilms (16) bei einer Temperatur erfolgt, die oberhalb der Raumtemperatur liegt.

2. Verfahren nach Anspruch 1, **dadurch gekennzeichnet, dass** die Aushärtung des mindestens einen Klebefilms (16) bei einem Unterdruck zwischen 70 kPa und 100 kPa und bei einer Temperatur zwischen 115°C und 125°C erfolgt.

3. Verfahren nach Anspruch 1 oder 2, **dadurch gekennzeichnet, dass** die Oberflächengeometrie der Unterstützungskonstruktion (7) im Wesentlichen einer Oberflächengeometrie des zusammen zu klebenden und aus den Stringern (13) und dem Hautfeld (14) gebildeten Strukturbauteils (1) entspricht.

4. Verfahren nach einem der Ansprüche 1 bis 3, **dadurch gekennzeichnet, dass** die Stringer (13) und das Hautfeld (14) mit einer Aluminiumlegierung und/oder mit einem Verbundwerkstoff gebildet sind.

## Revendications

1. Procédé de fixation par collage sans autoclave de lisses (13) en alliage d'aluminium ou en matériau composite à un panneau de revêtement (14) en alliage d'aluminium afin de former des éléments structurels de grandes dimensions pour aéronef, ledit procédé présentant les étapes suivantes :
- au moins un film adhésif (16) est appliqué dans la région des points de raccordement (15) des lisses (13) et du panneau de revêtement (14), le film adhésif (16) étant conçu sous la forme d'une sous-couche tissée qui est imprégnée d'une résine époxy ;
- les lisses (13) et le panneau de revêtement (14) sont positionnés et alignés les uns par rapport aux autres sur une structure de support (7) ;
- les lisses alignées (13) et le panneau de revêtement aligné (14) sont recouverts d'un film sous vide (11, 18) afin de former un sac sous vide (12, 28), le film sous vide (11, 18) étant appliqué directement sur les lisses (13) et le panneau de revêtement (14) qui doivent être fixés ensemble par collage ;
- un vide partiel pᵢₙₜ est appliqué au sac sous vide (12, 28) afin d' appliquer une pression de contact suffisante aux lisses (13) et au panneau de revêtement (14) à l'aide de la pression de l'air ambiant p_{pression air}; et
- le au moins un film adhésif (16) est durci afin de définitivement fixer par collage les lisses (13) et le panneau de revêtement (14) ensemble, le durcissement du au moins un film adhésif (16) ayant lieu à une température qui est supérieure à la température ambiante.

2. Procédé selon la revendication 1, **caractérisé en ce que** le au moins un film adhésif (16) est durci à un vide partiel entre 70 kPa et 100 kPa et à une température entre 115°C et 125°C.

3. Procédé selon la revendication 1 ou 2, **caractérisé en ce que** la géométrie de surface de la structure de support (7) correspond pour l'essentiel à une géométrie de surface de l'élément structurel (1) qui doit être fixé par collage et se compose des lisses (13) et du panneau de revêtement (14).

4. Procédé selon l'une des revendications 1 à 3, **caractérisé en ce que** les lisses (13) et le panneau de revêtement (14) présentent un alliage aluminium et/ou un matériau composite.
